Europäisches Patentamt

European Patent Office

Office européen des brevets

(11) Publication number: **0 433 243 A2**

# EUROPEAN PATENT APPLICATION

(21) Application number: 90830457.9

(22) Date of filing: 16.10.90

(51) Int. Cl.⁵: **B60N 2/08**

(30) Priority: 16.10.89 IT 2203189
16.10.89 IT 2192789

(43) Date of publication of application:
**19.06.91 Bulletin 91/25**

(84) Designated Contracting States:
AT BE CH DE DK ES FR GB GR IT LI LU NL SE

(71) Applicant: CAMA S.p.A.
Via Cuneo 9
I-20090 Redecesio di Segrate (Milano)(IT)

(72) Inventor: Pastarini, Aldo
Via Francesco Redi 28
I-20100 Milano(IT)

(74) Representative: Marietti, Giuseppe
STUDIO ASSOCIATO MARIETTI &
PIPPARELLI, Viale Caldara 38
I-20122 Milano(IT)

(54) Unified control device for a group of seat sliding mechanisms.

(57) A control device for a group of sliding mecha-
nisms to move a seat in the horizontal direction in
order to adjust its position and in an oblique direc-
tion in order to adjust its height, of the type consist-
ing of two couples of sliding mechanisms, horizontal
and oblique respectively, comprises a primary lever,
pivoted on a first sliding mechanism and movable
between a first position of engagement of a first
control lever of the clamping means of said first
sliding mechanism to release said means, a second
position of engagement of a second control lever of
the clamping means of said second sliding mecha-
nism to release said means, and a neutral non-
operative position, in correspondence to which the
means of both said sliding mechanis are in a
clamped position.

# UNIFIED CONTROL DEVICE FOR A GROUP OF SEAT SLIDING MECHANISMS

The present invention concerns a control device for a group of seat sliding mechanisms. More in particular, the invention concerns a unitary control device for a group of sliding mechanisms of the type allowing to move a car seat horizontally as well as obliquely in order to adjust its height.

Car seats provided with a group of sliding mechanisms are already known, said group allowing the adjustement of the seat both in the horizontal direction, namely in the direction in which the car front seats are usually adjusted, and in the slant direction in order to modify the seat height with respect of the controls as a function of the driver's height.

For this purpose, said seats are provided with a group of sliding mechanisms consisting of a first couple of sliding mechanisms integral to the seat to allow its horizontal translation as well as of a second couple of sliding mechanisms positioned obliquely and integral both to the car floor pan and to the first couple of sliding mechanisms to allow the adjustment in height of said seat. Said sliding mechanisms are of a known type, namely they are constituted by a couple of sections slidingly fixed to each other and by means to reversibly clamp a section to the other one.

Therefore the known groups of sliding mechanisms allow to adjust the height and distance of the seat with respect to the car controls, but they have the disadvantage of requiring two different controls separately acting on the clamping means of a section with respect to the other.

In other words, the known groups require a control for the sliding mechanism allowing the horizontal translation and a second control for the sliding mechanism allowing the slant translation, the latter for height adjustment.

The economic drawbacks and technical problems deriving from this kind of double-control solution are evident; there is therefore the need of providing a control device for a group of sliding mechanisms of the aforedescribed type which is simultaneously simple, economic to be manufactured, precise, reliable and easy to be used.

An object of the present invention is to solve the aforesaid problems by carrying-out a unitary control device for the two couples of sliding mechanisms.

More in particular, the present invention concerns a control device for a group of seat sliding mechanisms, wherein said group is of the type consisting, on each of the two sides of the seat, of a substantially horizontal sliding mechanism for the horizontal translation of the seat, and of a sliding mechanism positioned obliquely to· the horizontal one for the adjustment in height of said seat, characterized in that it comprises a primary lever, pivoted on a first of said two sliding mechanisms and movable between a first position, in which it engages of a first control lever of a reversible clamping means of said first sliding mecahnism to release said means, a second position in which it engages of a second control level of the reversible clamping means of the second of said sliding mechanisms to release said means, and a neutral non-operative position in which the clamping means of both said sliding mechanisms are in their clamped position.

The invention will be now further described with reference to the accompany drawings given by way of example and without limiting purposes, wherein:

- figure 1 is a partially sectional side view of a prefered embodiment of the device according to the invention;
- figure 2 is a side view of a detail of the device of fig. 1;
- figure 3 is a cross-sectional view of the device of fig.1;
- figures 4 and 5 are enlarged cross-sectional views of two different positions of the primary lever of the device of fig. 3;
- figure 6 is a side view, partially in section, of the device of figure 1 in a different position;
- figure 7 is a partial view from the top of the lower sliding mechanism;
- figure 8 is a partially sectional side view of the sliding mechanism of figure 7; and
- figure 9 is a partial view from the inner side of the clamping lever of the lower sliding mechanism.

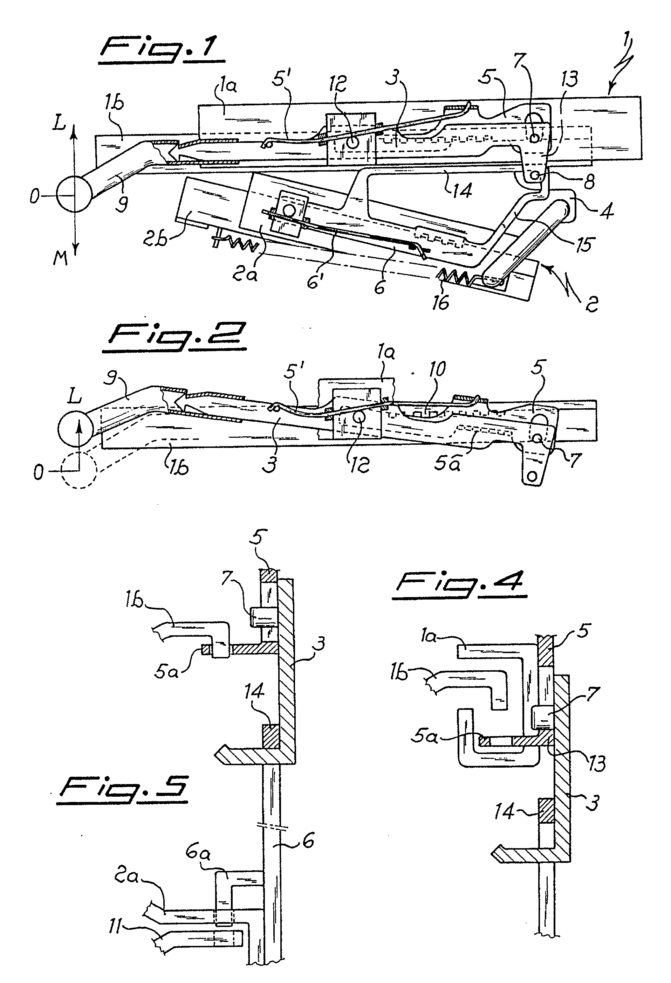

Referring first of all to figure 1, the right side of a group of sliding mechanisms for seats is shown. As in the already known configurations, the left side is symmetrical to the right side shown in figure 1.

As previously mentioned, two different sliding mechanisms 1 and 2 are present allowing to obtain respectively the horizontal translation of the seat and the slanting translation as well to adjust its height. Each sliding mechanism consists, in a known way, of two sections 1a, 1b and 2a, 2b, respectively, and of lever means for reversibly clamping the upper sections 1a, 2a on the respective lower sections 1b, 2b. The lower section 1b of the upper mechanism 1 is fixed in a known way by a crosspiece 4 to the upper section 2a of the lower sliding mechanism 2.

According to the principle of the invention, the control device of the group comprises a primary lever 3 movable between a first position L of engagement of a first control lever 5 of the clamping means of the first sliding mechanism 1, a second position M of engagement of a second control lever 6 of the clamping means of the second sliding mechanism 2 and a neutral non-operative position O, in which the clamping means of the sliding mechanisms 1 and 2, as controlled by levers 5 and 6 respectively, are in their clamped position.

It is to be noted that, though the present description refers to the preferential embodiment of figures 1-6, wherein said first sliding mechanism is the horizontal one and is positioned above the second slant sliding mechanism, the principle of the invention can be applied to any type of group of sliding mechanisms, independently from the arrangement of the sliding mechanisms or from the nature of their clamping means.

As it can be noticed in figure 1, the primary lever 3 is normally held by a return spring 5' in the neutral non-operative position O which is intermediate between the abovesaid first and second engagement positions L and M.

The primary lever 3 is provided with engaging means 7 and 8, projecting from said lever and positioned on the end of the arm of lever 3 opposite to the one bearing the control handle 9, to alternatively stress the relevant levers 5 and 6 in opposition to the relevant return springs 5' and 6'. The spring 5' therefore constitutes the return spring of both levers 3 and 5, which are also fitted on said first sliding mechanism 1 on the same fulcrum point 12. The projections 7 and 8 are spaced vertically from one another and, more in particular, the upper projection 7 is adjacent to a first operating bar 13 intergral to the lever 5, whilst the lower projection 8 is adjacent to a second bar 14 intergral to the second lever 6. The bars 13 and 14 are positioned between projections 7 and 8.

In the preferential embodiment of figure 1, the bar 13 is constituted by the lower side of a slot provided at the end of the lever 5, whilst the bar 14 is parallel to the sliding mechanism 1, is at least as long as the travel of the sliding mechanism 1 and is made integral to the second lever 6 by way of two linking members 15.

Levers 3, 5 and 6 are kept in their relevant positions in a known way by means of retaining plates which have also a retaining function for the springs 5' and 6'.

The device operation will be now further clarified with reference also to figures 2 to 6.

Moving the handle 9 of the primary lever 3 towards the position L, the lever 3 reaches the position as shown in figure 2 and the projection 7 stresses downwards the lever 5 releasing the section 1a with respect to the section 1b and allowing the translation of the seat in the horizontal direction.

On the contrary, by moving the handle 9 towards the position M, the projecton 8 of the lever 3 stresses upwards through the bar 14 the second lever 6 releasing the section 2a with respect to the section 2b and allowing a slant translation and the adjustment in height of the seat.

In figure 3 the cross section of the device shows a peculiar structure of the sliding mechanisms and their relevant reversible clamping means.

As shown in figure 3, the sliding mechanisms 1 and 2 are of the type formed by a couple of opposite U-shaped sections fixed to one another by way of reciprocal engagement of the corresponding edges and wherein two or more rolling balls 9' are housed.

The clamping means of the sliding mechanism 1 are of the type described in the Italian patent N. 1037426 and Utility Model N. 197400, both filed by the applicant, wherein a plurality of notches or teeth provided on the edge 10 of the section 1b are reversibly engaged by two or more teeth or slots provided on a plate 5a integral to the lever 5.

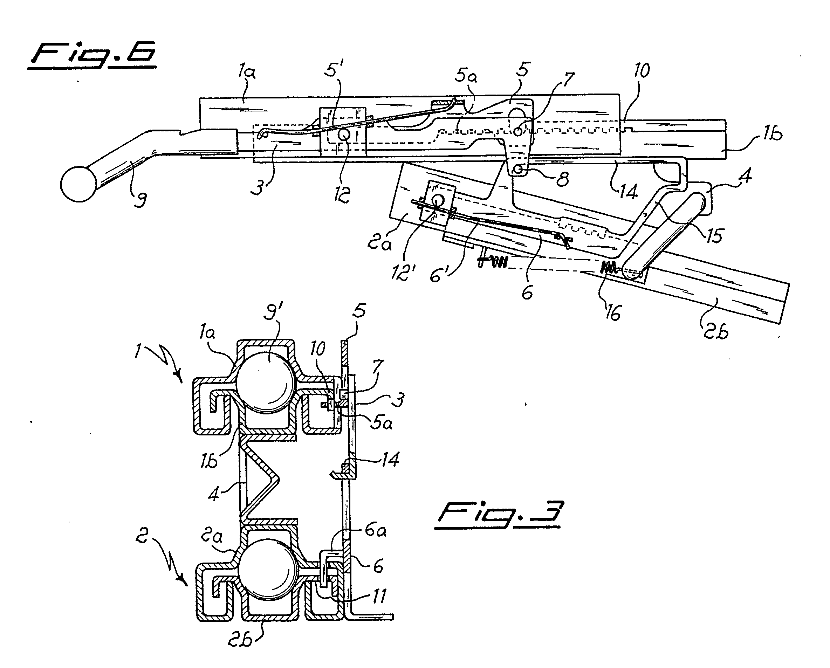

The reversible clamping means of the sliding mechanism 2 are substantially constituted by a plate 6a integral to the lever 6 and bearing two or more teeth capable of engaging two or more slots of a plurality of slots provided on the edge 11 of the section 2b. The configuration and operation of said clamping means are hereunder described more in detail with reference to figures 7 to 9.

The sliding mechanism 1 consists, as mentioned hereabove, of a couple of U-shaped sections 2a and 2b opposite to one another so as to form an internal seat where two or more balls are housed. The two sections 2a and 2b are fixed to one another by means of their relevant edges, which are U-bent and can therefore reciprocally match so as to result one external to the other.

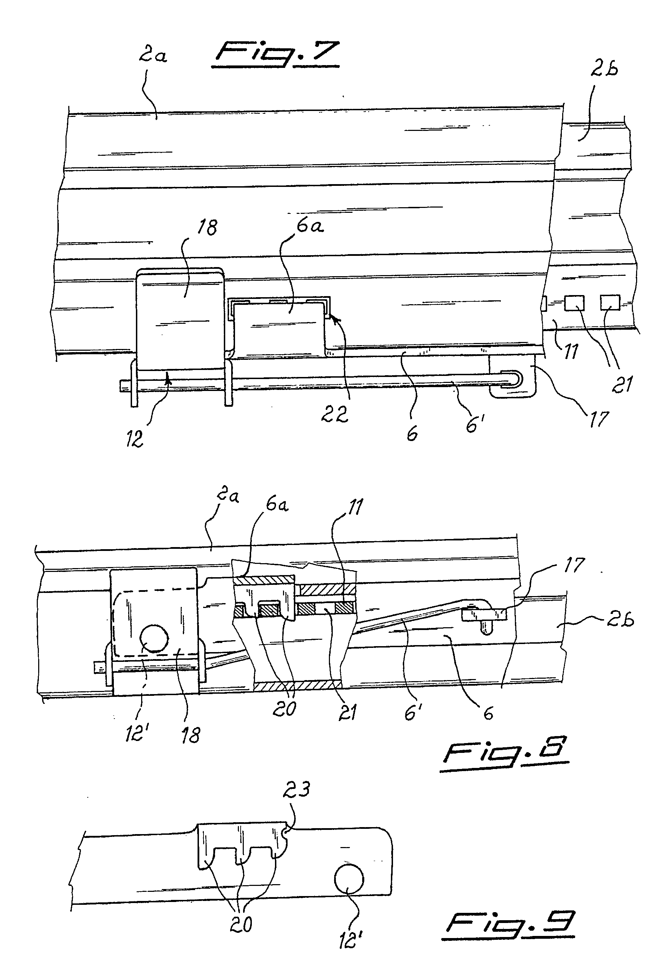

In the preferential embodiment of figures 7 and 8, the edge of the upper section 2a results to be external to the edge 11 of the lower section 2b.

When the sliding mechanism is put in place, the section 2b is fixed to the car body thus becoming stationary, while the section 2a remains freely sliding for a predetermined length along the lower section 2.

The previously described lever 6 is positioned sideways to one of the edges of the external section 2a, pivoted in 12' on said external edge and is provided with a return spring 6' fixed at one end to a plate 17.

The other end of said spring is fixed to a check plate 18 in correspondence to which the fulcrum 12' of the lever 6 is positioned. On the arm of the lever 6 there is provided an L-shaped plate 6a which, in the preferential embodiment as shown, is obtained by bending the appropriately sheared sheet forming the lever 6.

The plate 6a is projecting towards the internal part of the sliding mechanism and is provided on its own lower free edge with three or more teeth 20 which, in the clamped position, engage as many slots 21 provided on the flange of the edge 11 of the inner section 2b. Said slots 21 are part of a plurality of similar slots aligned along said edge 11 for a predetermined length and substantially corresponding to the desired travel.

As it can be noticed from the figures, in order to limit the clearance between teeth and slots, the teeth 20 are cone-shaped; preferably said teeth are obtained by coining.

Said slots 21 are preferably rectangular, but it is evident that any desired shape of reciprocally engaging slots and teeth can be adopted.

In order to allow the teeth 20 to penetrate the slots 21, the prefered solution envisages the presence of an opening 22 provided in correspondence to the plate 6a on the edge the external section 2a. Analogous solutions are obviously possible such as for instance the presence of single slots for the passage of the teeth.

On the vertical edge of the plate 6a there is provided (Fig. 9) a backreaction notch 23 which has the function of engaging the section in case of strong stresses such as those deriving from an impact caused by a car accident. The notch 23 is provided on the front or back edge of the plate according to the assembling of the clamping device and to the type of stresses to which it is submitted in case of accident. In the prefered embodiment as illustrated, the notch 23 is provided on the front vertical edge.

During operation (fig. 4), by actuating the primary lever 3 towards the position L in the previously described way, the projection 7 of the lever 3 fits into the lower side 13 of the slot provided in the lever 5 moving it downwards. This downward movement of the lever 5 arm also lowers the plate 5a fixed to it, thus disengaging the slots of said plate 5a from the teeth present on the edge 10 of the section 1b and allowing the horizontal adjustment of the seat. Moving the lever 3 to the M position, the projection 8 seats on the bar 14 moving upwards also the lever 6 which is integral to it.

This upwards movement causes a lifting movement of plate 6a, integral to the lever 6, to disengage its teeth 20 from the positioning slots present on the edge 11 of the section 2b. The seat can be now adjusted in height with the possible aid of the balancing spring 16.

In figure 1 the group is shown with the seat in completely backward and lowered position, while in figure 6 the same group is illustrated with the seat in the fore and completely lifted position.

What hereinabove described clearly shows that the device according to the invention allows to adjust the two functions of translation, the horizontal one and that in height, by means of a single control which is at the same time solid, reliable, economic to be manufactured and easy to be used.

## Claims

1. A control device for a group of sliding mechanisms for seats, wherein said group is of the type consisting, on each of the sides of the seat, of a substantially horizontal sliding mechanism for the horizontal translation of the seat, and of a sliding mechanism positioned obliquely with respect to the horizontal one for the adjustment in height of said seat, characterized in that it comprises a primary lever, pivoted on a first of said sliding mechanisms and movable between a first position of engagement of a first control lever of the reversible clamping means of said first sliding mechanism to release said means, a second position of engagement of a second control lever of said reversible clamping means of the second of said sliding mechanisms to release said means, and a neutral non-operative position in which the clamping means of both said sliding mechanisms are in their clamped position.

2. A device according to claim 1, characterized in that said primary lever is provided with projecting engaging means in order to alternatively stress said first lever and said second lever in opposition to relevant return springs and consequently obtain the release of said first and second sliding mechanisms to allow it to be actuated.

3. A device according to claim 2, characterized in that said neutral position of the primary lever is an intermediate position between said first and said second engagement positions, said primary lever being normally held in said neutral position by means of a return spring.

4. A device according to claim 3, wherein the horizontal sliding mechanism is positioned above the inclined one, characterized in that said primary lever and said first lever are pivoted on the horizontal sliding mechanism and said second lever is pivoted on the oblique sliding one.

5. A device according to claim 4, characterized in that said primary lever and said first lever are pivoted on said first sliding mechanism in the same fulcrum point and are stressed by the same return spring.

6. A device according to claim 4 or 5, characterized in that said engaging means are provided at the end of the arm of said primary lever opposite to the one bearing the relevant control handle, and in that said engaging means comprise a couple of projections vertically spaced from one another, the upper projection being adjacent to a first actuating bar integral to said first lever, and the lower projection being adjacent to a second actuating bar of said second lever, the actuating bars being located between the actuating projections.

7. A device according to claim 6, characterized in that said first actuating bar is constituted by the lower side of a slot provided in said first lever.

8. A device according to claim 6 or 7, characterized in that said second actuating bar is a bar parallel to said horizontal sliding mechanism, said bar extending in length at least as far as the travel of said horizontal sliding mechanism and being integral to said second lever thanks to one or more linking members.

9. A device according to any of the preceding claims, characterized in that said sliding mechanisms are of the type consisting of a couple of U-shaped opposite sections fixed to one another by way of reciprocal engagement of their correspondent edges, one bent on the outside of the other, so as to form an inner seat where two or more rolling balls are housed.

10. A device according to claim 9, characterized in that the clamping means of at least one of said sliding mechanisms are of the type comprising a plurality of notches or teeth provided on the edge of the lower section and two or more teeth or slots provided on a plate integral to the control lever of said means and capable of engaging two or more notches or teeth.

11. A device according to claim 9, characterized in that the clamping means of at least one of said sliding mechanisms are of the type comprising a plurality of positioning slots provided on an edge of the lower section and a plurality of teeth provided on a plate integral to the control lever of said means and capable of engaging a corresponding plurality of positioning slots.

12. A device according to claim 9, characterized in that said upper horizontal sliding mechanism is a sliding mechanism according to claim 10 and in that said oblique lower sliding mechanism is a sliding mechanism according to claim 11.

13. A device according to claim 12, characterized in that, in the clamped position, the portion of said plate bearing the teeth engaged with said positioning slots is housed in an opening provided on the outer profile.

14. A device according to claim 13, characterized in that said plate is provided with three cone-shaped teeth and wherein on the vertical front or back edge of said plate there is provided a backreaction notch.

*Fig.1*

*Fig.2*

*Fig.4*

*Fig.5*

_Fig.6_

_Fig.3_

EP 0 433 243 A2

Fig.7

Fig.8

Fig.9